# EUROPEAN PATENT SPECIFICATION

(11) **EP 0 614 796 B1**
(45) Date of publication and mention of the grant of the patent: **06.08.1997**
(21) Application number: 94301677.4
(22) Date of filing: 09.03.1994
(51) Int. Cl.: B62D 7/20

(54) **Motor vehicle steering apparatus**
Lenkgestänge für ein Kraftfahrzeug
Tringlerie de direction d'une automobile

(30) Priority: 10.03.1993 GB 9304875
(43) Date of publication of application: 14.09.1994
(73) Proprietor: FORD MOTOR COMPANY LIMITED, Brentwood, Essex CM13 3BW (GB); FORD FRANCE S. A., 92506 Rueil-Malmaison Cédex (FR); Ford-Werke Aktiengesellschaft, 50735 Köln (DE)
(72) Inventor: Baskett, William Carl, Maldon, Essex CM9 8DE (GB); Ivory, Douglas William, Wickford, Essex SS12 9AL (GB)
(74) Representative: Messulam, Alec Moses

(56) References cited:
- CH-A- 415 151
- DE-A- 2 752 570

## Description

This invention relates to a steering arrangement for the road wheels of a motor vehicle.

The demands for high manoeuvrability of motor vehicles and particularly motor cars and commercial vehicles have always been high but vehicle bodywork design has sometimes imposed limitations on the scope of the steering lock to avoid fouling of the wheels or tyres on the bodywork or other vehicle part at the extremes of the steering lock.

The risk of such fouling has therefore been of some concern to the motor industry and the aim has been to control vehicle manufacture such that when a steerable wheel is in the full hang position, that is with the wheel off the road and hanging freely from its associated vehicle suspension, no fouling will occur at either extremity of the steering lock. It has also been an aim to avoid fouling at steering lock extremities when the vehicle is heavily laden.

These aims have imposed serious limitations on steering lock scope while the demands for high manoeuvrability have increased as a consequence of greater congestion on the roads.

US Patent Specification 4 536 003 describes a mechanism for limiting the steering movement of a steering wheel.

Another mechanism is described in patent document DE 2 752 570 A1. This discloses a mechanism which progressively limits the steering movement of a steering wheel according to the degree of wheel hang. The features of the pre-characterising part of Claim 1 are known from this document.

According to the present invention there is provided a steering arrangement for a motor vehicle, the arrangement comprising a steering rod reciprocable within a steering housing in a direction transverse of the vehicle to effect steering movement of a pair of road wheels, the steering rod being connected to steering arms on the road wheels by tie rods connected to opposite ends of the steering rod and to the arms by universal joints, the tie rods each having a radial extension to limit the scope of steering lock, characterised in that the steering rod has a projection positioned so that it will come into abutting contact with primary stop means to limit the scope of steering lock when the tie rod is in line with the steering rod, and in that the radial extension will come into abutting contact with secondary stop means to limit the scope of steering lock when the tie rod is at a pre-selected angle above or below the steering rod, the scope of steering lock being greater when the scope is limited by the projection and primary stop means than when the scope is limited by the radial extension and secondary stop means.

The motor vehicle steering apparatus of this invention allows a large steering lock scope to be achieved under normal vehicle operating conditions, while restricting the lock at the extremes of wheel suspension travel, to avoid the wheel fouling the bodywork at full lock.

The motor vehicle steering apparatus of this invention may comprise a manual, power or power-assisted drive means of known type contained within a steering housing to drive the steering rods.

The steering rods which are preferably axially aligned and which may be integrally connected to one another are preferably arranged so that in use they reciprocate within the housing. Each steering rod has a projection comprising a projecting surface positioned so that it will come into abutting contact with primary stop means to limit the scope of steering lock during normal road operation of the vehicle under normal loads. Accordingly, a projecting surface may be a shoulder on one steering rod which comes into abutting contact with a primary stop means comprising an inner shoulder or surface of the housing, to limit the extension of the rod and correspondingly the retraction of the other rod. However, it is preferred that the projecting surfaces on the steering rods are external of the housing and that they alternately come into abutting contact with primary stop means comprising the end faces of the housing to limit the normal scope of the steering lock.

It is particularly preferred that the projections on the steering rods are projecting surfaces provided on means connected to the steering rods to hingedly attach thereto the respective tie rods.

The tie rods which are hingedly attached to respective steering rods at one end have their other ends hingedly attached respectively to steering arms of the steerable road wheels in known fashion.

The hinged connections between the tie rods and the steering rods may comprise any hinge of suitable strength which will permit relative up and down and some relative horizontal angular movement of the tie rods relative to their respective steering rods. However, it is preferred that the hinged connections comprise ball and socket hinges and more preferably wherein the sockets are attached to the respective ends of the steering rods. The hinged connections are preferably such as to accommodate the full-hang position of their associated steerable road wheels and/or heavy loading of the vehicle.

The radial extension with which each tie rod is provided may be any such extension which will obstruct the movement of its associated steering rod to its fully retracted position when the tie rod is at a pre-selected angle to the axis of the steering rod by coming into abutting contact with a secondary stop means whereby fouling of the wheel on the vehicle body or other vehicle part is avoided.

The radial extension is preferably symmetrical about the tie rod to accommodate any rotation of the tie rod that might occur in use or for example in adjustment.

The pre-selected angle may be any pre-selected angle the tie rod makes with the axis of the steering rod.

It is preferred that the pre-selected angle is the angle the tie rod makes with the axis of the steering rod when the associated steerable wheel is in the full hang position and/or that angle, which may be equal or different, made when the vehicle is heavily laden. If the pre-selected angles are smaller angles than these, that is to say the pre-selected angles are such that in each case the tie rod is more closely aligned with the steering rod, clearly this will not prevent the radial extension from coming into abutting contact with secondary stop means when full steering lock is applied in either the full hang position or when the vehicle is heavily laden. Indeed as a matter of practicality in assembly the freedom of up and down movement of the tie rod each side of its normal vehicle loading position before the radial extension comes into abutting contact with secondary stop means when full steering lock is applied is advantageously kept small.

The radial extension may comprise a simple rod or bracket attached to for example the under side of the tie bar and of such length and shape as to contact secondary stop means at least when the associated steerable road wheel is in the full hang position and prevent full retraction of the steering rod when full steering lock is applied to an extent to prevent fouling of the wheel (including tyre and snow chains) on the vehicle body or other vehicle part when full steering lock is applied. However, the radial extension is preferably cup-shaped having the open end facing towards the housing and preferably such as to provide some protection for the hinge against dirt, grit and water.

While the secondary stop means may be part of the vehicle chassis for example, it is preferably the housing or an attachment thereto. More preferably the secondary stop means comprises a tubular extension to each end of the housing. Such tubular extensions preferably also provide some protection for the hinges.

It will be appreciated that at least when the tie rods are not in axial alignment with the steering rods under normal vehicle loads for example the secondary stop means may need to have a specific shape to accommodate such misalignment. Thus, for example a secondary stop means comprising a tubular extension to an end of the housing may need to have a free edge profiled to be angled to the vertical and/or the horizontal for example to suit.

Further, because the tie rods are each susceptible to changes in angular position in a horizontal plane during use in steering even under normal vehicle loading, the secondary stop means is preferably profiled to accommodate such changes so that substantially no alteration in the effect of the secondary stop means arises from such changes. Thus for example a secondary stop means may be profiled to have a projecting surface having a radius in a horizontal plane and over which a radial extension of the tie rod may pass without the effect of the secondary stop means being altered when the tie rod is at the pre-selected angle.

When the radial extensions of the tie rods are cup-shaped it is preferred that the tubular extensions to the steering housing have the same diameter. Whereby, for example in the full hang situation for a steerable wheel the lip of the associated cup will contact the outer edge or lip of the corresponding tubular extension of the housing and thereby obstruct full retraction of the steering rod which may be made otherwise possible with the wheel in the normal on the road position especially under normal vehicle loads.

It will be appreciated that if the radial extension of the tie rod extends above the tie rod whereby angular movement of the tie rod in response to the motor vehicle being heavily laden, can cause the extension to come into abutting contact with secondary stop means, the associated steering rod may be prevented from reaching its normal fully retracted position. In this way, the steering apparatus of this invention may be employed to prevent fouling of a steerable road wheel on the body or other part of a motor vehicle which is heavily laden.

It is considered that a motor car for example carrying a load equivalent to up to three adults is normally laden.

It is preferred that the radial extension of the tie rod extends both above and below the tie rod so that prevention of fouling is at least prevented in both the full hang and heavily laden positions of the tie rod. In this context cup-shaped radial extensions on the tie rods and a secondary stop means comprising profiled extensions of the ends of the steering housing are particularly preferred.

The present invention will now be described, by way of example, with reference to the accompanying drawings in which:-
Figure 1 illustrates a motor vehicle steering apparatus according to this invention;
Figure 2 is a vertical cross section through a steering joint with the corresponding wheel in its normal position;
Figure 3 is a section corresponding to Figure 2, but showing the configuration of the joint when the corresponding wheel is in the full hang position; and
Figure 4 illustrates a view, from above, of the components shown in Figures 2 and 3.

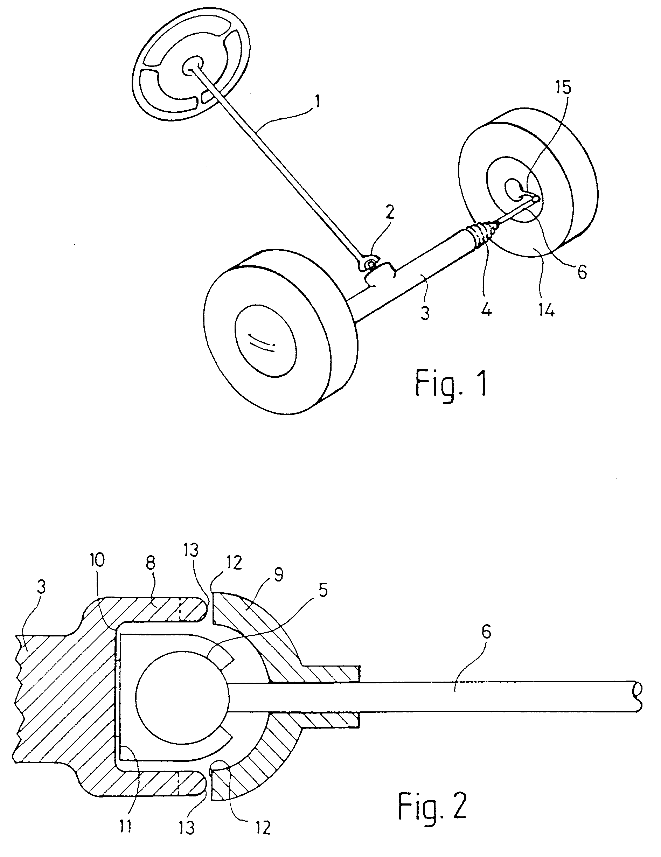

Figure 1 shows in general form, a motor vehicle steering apparatus. A steering column 1 is connected via a universal joint 2 to a rack and pinion steering gear contained in a steering housing 3. Each end (one only shown) of the steering housing 3 is covered by a corrugated rubber protective boot 4 which also covers a ball and socket hinged joint 5 shown in Figures 2, 3 and 4 attaching in hinged manner a tie rod 6 to a steering rod 7. The steering rods 7 are driven by the rack and pinion steering gear. The tie rods 6 are attached in hinged manner at their other ends to the steering arms 15 (one only shown) via ball and socket joints.

Each end of the steering housing 3 is provided with a tubular end extension 8 and each of the tie rods 6 is provided with a cup-shaped radial extension 9 which is welded to the tie rod.

The tubular extension 8 is profiled with contact projections 13 positioned substantially diametrically opposite one another. The contact projections are domed or radiused as shown in Figure 2, 3 and 4 to accommodate changes in the horizontal angular contact position of the extension 9 of the tie bar 6, during use in steering, without significantly altering the effect of the secondary stop means. The contact projections 13 are shown to extend to the same vertical plane, the tie bar 6 being in horizontal alignment with the steering rod 7 as shown in Figure 2 when the steerable wheel 14 is on the road and subjected to normal vehicle loading. If the tie bar 6 was not in horizontal alignment under such conditions the contact projections would be arranged such that the common contact plane is correspondingly angled to the vertical.

The dimensions of the tubular extensions 8 of the contact projections 13 and of the cup-shaped radial extensions 9 are selected such that when the motor vehicle has the relevant steerable wheel in the normal on the road position, with the vehicle normally laden the edge or lip 12 of the contact projections 13 of the relevant cup 9 and the tubular extension 8 respectively do not contact such as to prevent the full retraction of the steering rod 7 when maximum lock is applied. In such fully retracted position the end face 10 of the housing 3 acts as primary stop against which the rear face 11 of the hinge 5 then abuts. The dimensions of the tubular extensions 8 of the contact projections 13 and of the cup-shaped radial extensions 9 are, on the other hand, also selected so that fouling of the wheels (including tyres and eg snow chains) on the body or other vehicle part will not occur with the wheels in the full hang position when maximum lock is applied to the steering. Alternatively or additionally, the dimensions are selected so that when maximum lock is applied when the vehicle is heavily laden, no fouling of the wheels on the body or other vehicle part will occur. The dimensions can be such that full retraction is prevented at some point intermediate of the full hang and heavily laden situations.

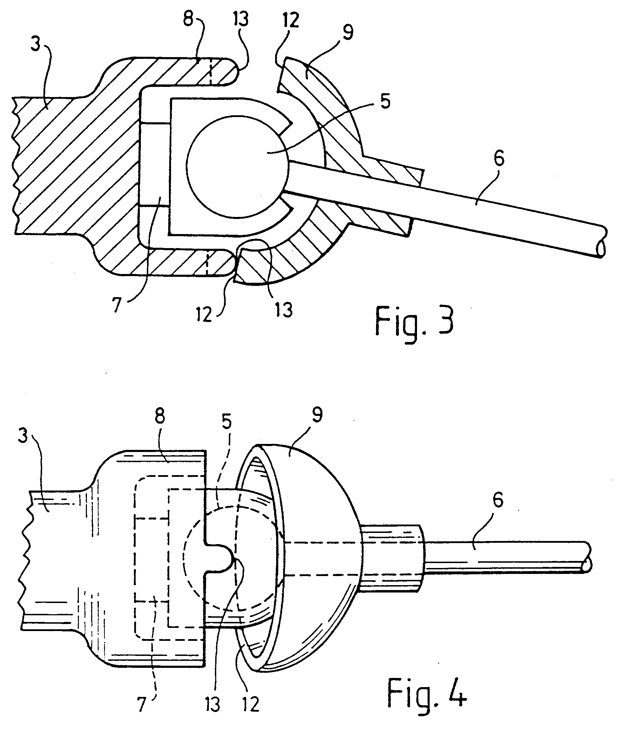

If the steering column 1 of the vehicle is turned to put the road wheels in the straight ahead position and then the vehicle to which the steering apparatus is connected is jacked up to cause the wheel 14 to hang freely from its suspension (not shown), the tie bar 6 takes up an angle with the axis of the steering rod 7 with corresponding angular displacement of the lip surface 12 of the cup-shaped extension 9 in relation to the contact projections 13 of the tubular extension 8. On turning the steering column 1 towards full right hand lock for example to retract the steering rod 7, it will be seen from Figure 3 that full retraction is prevented by the surface of lip 12 coming into abutting contact with secondary stop means in the form of the surface of the lower contact projection 13.

It will be seen that with the steerable wheels in their normal on the road position, if the vehicle is heavily laden the tie rod 6 may take up a certain corresponding angle with the axis of the steering rod on the other side of the horizontal shown in Figure 3. The effect would be similar to that described above with the lip surface 12 contacting the surface of the upper contact projection 13 to prevent full retraction of steering rod 7 at maximum attainable lock.

The description of the steering apparatus with reference to the drawings herewith has, for simplicity made mention of a rack and pinion drive means in the steering housing. However, hydraulically assisted rack and pinion steering drive or pure hydraulic steering drive may easily replace the rack and pinion drive to which reference is made.

## Claims

1. A steering arrangement for a motor vehicle, the arrangement comprising a steering rod (7) reciprocable within a steering housing (3) in a direction transverse of the vehicle to effect steering movement of a pair of road wheels (14), the steering rod (7) being connected to steering arms (15) on the road wheels by tie rods (6) connected to opposite ends of the steering rod (7) and to the arms by universal joints (5), the tie rods (6) each having a radial extension (9) to limit the scope of steering lock, characterised in that the steering rod (7) has a projection (11) positioned so that it will come into abutting contact with primary stop means (10) to limit the scope of steering lock when the tie rod (6) is in line with the steering rod (7), and in that the radial extension (9) will come into abutting contact with secondary stop means (8) to limit the scope of steering lock when the tie rod is at a pre-selected angle above or below the steering rod, the scope of steering lock being greater when the scope is limited by the projection (11) and primary stop means (10) than when the scope is limited by the radial extension (9) and secondary stop means (8).

2. A steering arrangement as claimed in Claim 1, characterised in that the projection is a shoulder (11) on the steering rod (7) and the primary stop means is an inner shoulder of the housing (10).

3. A steering arrangement as claimed in Claim 2, characterised in that the universal joint connecting a tie rod to the steering rod is a ball joint (5) with a socket that is formed within the shoulder (11) on the steering rod (7).

4. A steering arrangement as claimed in any one of Claims 1 to 3, characterised in that the secondary stop means is a component (8) mounted on the steering housing (3) and the radial extension is a component (9) mounted on the tie rod (6).

5. A steering arrangement as claimed in Claim 4, characterised in that the component (8) mounted on the steering housing (3) has a cup-shaped end region surrounding each universal joint (5) between the steering rod (7) and a tie rod (6), and the periphery of the cup-shaped region has, an axial projection (13) at a region positioned above the axis of the steering rod (7).

6. A steering arrangement as claimed in Claim 5, characterised in that the cup-shaped region has axial projections (13) both above and below the axis of the steering rod (7).

7. A steering arrangement as claimed in Claim 5 or Claim 6, characterised in that the axial projections (13) end in domed surfaces.

8. A steering arrangement as claimed in any one of Claims 4 to 7, characterised in that the component (9) mounted on the tie rod (6) has a periphery of substantially constant axial extent, referred to the axis of the tie rod.

## Patentansprüche

1. Eine Lenkvorrichtung für ein Kraftfahrzeug, wobei die Vorrichtung eine Lenkstange (7) einschließt, die innerhalb eines Lenkgehäuses (3) in Querrichtung zu dem Fahrzeug hin- und herbewegt werden kann, um die Lenkbewegung eines Radpaares (14) zu veranlassen, wobei die Lenkstange (7) an den entgegengesetzten Enden der Lenkstange (7) über Spurstangen (6) mit den Längslenkern (15) an den Rädern verbunden ist, und mit den Längslenkern durch Universalgelenke (5), wobei jede der Spurstangen (6) einen radialen Fortsatz (9) besitzt, um den Radeinschlag zu begrenzen, dadurch gekennzeichnet, daß die Lenkstange (7) einen Vorsprung (11) aufweist, der so positioniert ist, daß er in Stoßkontakt mit einer ersten Arretiervorrichtung (10) gerät, um den Radeinschlag zu begrenzen, wenn die Spurstange (6) in derselben Linie wie die Lenkstange (7) ist, und dadurch, daß der radiale Fortsatz (9) in Stoßkontakt mit einer zweiten Arretiervorrichtung (8) tritt, um den Radeinschlag zu begrenzen, wenn sich die Spurstange in einem vorgewählten Winkel oberhalb oder unterhalb der Lenkstange befindet, wobei der Radeinschlag größer ist, wenn der Einschlag durch den Vorsprung (11) und die erste Arretiervorrichtung (10) begrenzt wird, als wenn der Einschlag durch den radialen Fortsatz (9) und die zweite Arretiervorrichtung (8) begrenzt wird.

2. Eine Lenkvorrichtung nach Anspruch 1, dadurch gekennzeichnet, daß der Vorsprung eine Schulter (11) auf der Lenkstange (7) ist und die erste Arretiervorrichtung eine innere Schulter des Gehäuses (10) ist.

3. Eine Lenkvorrichtung nach Anspruch 2, dadurch gekennzeichnet, daß die Universalverbindung, die eine Spurstange mit der Lenkstange verbindet, eine Kugelverbindung (5) mit einem Sockel ist, der innerhalb der Schulter (11) auf der Lenkstange (7) geformt ist.

4. Eine Lenkvorrichtung nach irgendeinem der Ansprüche 1 bis 3, dadurch gekennzeichnet, daß die zweite Arretiervorrichtung ein Bauteil (8), das auf dem Lenkgehäuse (3) montiert ist, und der radiale Fortsatz ein Bauteil (9) ist, das auf der Spurstange (6) montiert ist.

5. Eine Lenkvorrichtung nach Anspruch 4, dadurch gekennzeichnet, daß das Bauteil (8), das auf dem Lenkgehäuse (3) montiert ist, einen kugelschalenförmigen Endbereich besitzt, der jede Universalverbindung (5) zwischen der Lenkstange (7) und der Spurstange (6) umgibt, und die Peripherie des kugelschalenförmigen Bereichs einen axialen Vorsprung (13) in einer Höhe oberhalb der Achse der Lenkstange (7) aufweist.

6. Eine Lenkvorrichtung nach Anspruch 5, dadurch gekennzeichnet, daß der kugelschalenförmige Bereich axiale Vorsprünge (13) sowohl oberhalb als auch unterhalb der Achse der Lenkstange (7) aufweist.

7. Eine Lenkvorrichtung nach Anspruch 5 oder Anspruch 6, dadurch gekennzeichnet, daß die axialen Vorsprünge (13) mit gewölbten Oberflächen enden.

8. Eine Lenkvorrichtung nach irgendeinem der Ansprüche 4 bis 7, dadurch gekennzeichnet, daß das Bauteil (9), das an der Spurstange (6) befestigt ist, bezogen auf die Achse der Spurstange, einen Umfang im wesentlichen konstanter axialen Ausdehnung besitzt.

## Revendications

1. Mécanisme de direction pour un véhicule à moteur, le mécanisme comprenant une bielle de direction (7) pouvant aller et venir à l'intérieur d'un carter de direction (3) dans une direction transversale par rapport au véhicule pour permettre le mouvement de direction d'une paire de roues (14), la bielle de direction (7) étant connectée à des leviers de commande (15) sur les roues par des barres de raccordement (6) connectées aux extrémités opposées de la bielle de direction (7) et aux bras par des joints articulés (5), les barres de raccordement (6) présentant chacune une extension radiale (9) destinée à limiter le champ de la course de braquage, caractérisé en ce que la bielle de direction (7) présente une projection (11) située de manière à entrer en contact abouté avec des premiers moyens d'arrêt (10) destinés à limiter le champ de la course de braquage lorsque la barre de raccordement (6) est alignée avec la bielle de direction (7), et en ce que l'extension radiale (9) entre en contact abouté avec des seconds moyens d'arrêt (8) destinés à limiter le champ de la course de braquage lorsque la barre de raccordement est à un angle présélectionné au-dessus ou en-dessous de la bielle de direction, le champ de la course de braquage étant plus important lorsque le champ est limité par la projection (11) et les premiers moyens d'arrêt (10) que lorsque le champ est limité par l'extension radiale (9) et les seconds moyens d'arrêt (8).

2. Mécanisme de direction selon la revendication 1, caractérisé en ce que la projection est un épaulement (11) sur la bielle de direction (7) et les premiers moyens d'arrêt sont un épaulement interne du carter (10).

3. Mécanisme de direction selon la revendication 2, caractérisé en ce que le joint articulé reliant une barre de raccordement à la bielle de direction est un joint à rotule (5) avec un logement qui est formé à l'intérieur de l'épaulement (11) sur la bielle de direction (7).

4. Mécanisme de direction selon l'une des revendications 1 à 3, caractérisé en ce que les seconds moyens d'arrêt sont un composant (8) monté sur le carter de direction (3) et l'extension radiale est un composant (9) monté sur la barre de raccordement (6).

5. Mécanisme de direction selon la revendication 4, caractérisé en ce que le composant (8) monté sur le carter de direction (3) présente une zone terminale en forme de godet entourant chaque joint articulé (5) entre la bielle de direction (7) et une barre de raccordement (6), et la périphérie de la zone en forme de godet présente une projection axiale (13) au niveau d'une zone située au-dessus de l'axe de la bielle de direction (7).

6. Mécanisme de direction selon la revendication 5, caractérisé en ce que la zone en forme de godet présente des projections axiales (13) au-dessus et en-dessous de l'axe de la bielle de direction (7).

7. Mécanisme de direction selon la revendication 5 ou 6, caractérisé en ce que les projections axiales (13) se terminent par des surfaces bombées.

8. Mécanisme de direction selon l'une des revendications 4 à 7, caractérisé en ce que le composant (9) monté sur la barre de raccordement (6) présente une périphérie ayant une étendue axiale essentiellement constante en référence à l'axe de la barre de raccordement.
